(19) Europäisches Patentamt
European Patent Office
Office européen des brevets

(11) **EP 0 928 379 B1**

(12) **EUROPÄISCHE PATENTSCHRIFT**

(45) Veröffentlichungstag und Bekanntmachung des Hinweises auf die Patenterteilung:
**10.05.2000 Patentblatt 2000/19**

(51) Int Cl.$^7$: **F16D 48/06**

(21) Anmeldenummer: 97944732.3

(22) Anmeldetag: **18.09.1997**

(86) Internationale Anmeldenummer:
**PCT/DE97/02149**

(87) Internationale Veröffentlichungsnummer:
**WO 98/13620 (02.04.1998 Gazette 1998/13)**

(54) **AUTOMATISCH GESTEUERTE KUPPLUNG**

AUTOMATIC CLUTCH

EMBRAYAGE AUTOMATIQUE

(84) Benannte Vertragsstaaten:
**DE ES FR GB IT**

(30) Priorität: **25.09.1996 DE 19639294**

(43) Veröffentlichungstag der Anmeldung:
**14.07.1999 Patentblatt 1999/28**

(73) Patentinhaber: **DaimlerChrysler AG**
**70567 Stuttgart (DE)**

(72) Erfinder:
• **KOSIK, Franz**
**D-73760 Ostfildern (DE)**

• **GRASS, Thomas**
**D-73660 Urbach (DE)**

(74) Vertreter: **Patentanwalts-Partnerschaft**
**Rotermund + Pfusch**
**Waiblinger Strasse 11**
**70372 Stuttgart (DE)**

(56) Entgegenhaltungen:
**EP-A- 0 241 216**    **EP-A- 0 244 222**
**DE-A- 4 237 983**

**Beschreibung**

Die Erfindung betrifft eine automatisch gesteuerte Kupplung zwischen Motor und Antriebstrang eines Kraftfahrzeuges mit ausgangsseitig der Kupplung angeordnetem Getriebe, mit einem zum Öffnen und Schließen der Kupplung dienenden Stellaggregat, welches von einer Sensorik unter Berücksichtigung vorgegebener Parameter gesteuert wird, wobei die Sensorik Signalgeber für den Zustand des Getriebes sowie eingangsseitig und ausgangsseitig der Kupplung angeordnete Signalgeber zur Drehzahlerfassung aufweist und das Schließen der Kupplung in Abhängigkeit von Drehzahldifferenzen zwischen Eingang und Ausgang der Kupplung steuert, und wobei bei fehlendem ausgangsseitigen Drehzahlsignal ein Ersatzsignal erzeugt wird und wobei die Kupplung beim Wechsel einer Getriebestufe automatisch öffnet.

Eine derartige automatisch gesteuerte Kupplung ist Gegenstand der EP 0 241 216 A2. Nach dieser Druckschrift ist die automatisch gesteuerte Kupplung mit einem automatischen Getriebe kombiniert, so daß die genannte Kupplung nur dann geöffnet wird, wenn ein fahrerseitig betätigtes Bedienungsorgan für das Getriebe in eine Leerlaufstellung gebracht wird bzw. beim Umschalten zwischen Vorwärts- und Rückwärtsfahrt des Fahrzeuges die Leerlaufstellung durchläuft. Um die Kupplung beim nachfolgenden Schließen, d.h. beim Einlegen einer Fahrstufe, synchronisieren zu können, muß unter anderem die ausgangsseitige Drehzahl am Getriebe bekannt sein. Sollte das entsprechende Signal ausfallen, kann ein Ersatzsignal erzeugt werden, indem davon ausgegangen wird, daß keine nennenswerten Änderungen seit dem Zeitpunkt des Öffnens der Kupplung aufgetreten seien. Damit kann die ausgangsseitige Drehzahl aus dem vor dem Öffnen der Kupplung ermittelten Getriebezustand, d.h. der Getriebeübersetzung, in Verbindung mit der Motordrehzahl bestimmt werden.

Gegebenenfalls kann bei einer vor und nach dem letzten Öffnen der Kupplung durchgehend betätigten Betriebsbremse das Maß des Drehzahlabfalles vor dem Öffnen der Kupplung registriert und nachfolgend davon ausgegangen werden, daß die Wirkung der Betriebsbremse im wesentlichen gleich geblieben sei. Im Ergebnis wird dann auch bei geöffneter Kupplung ein analoger Drehzahlabfall auf der Getriebeausgangsseite in Rechnung gestellt.

Soweit Fahrzeuge ein vom Fahrer zwischen verschiedenen Getriebestufen geschaltetes Getriebe aufweisen, muß während des Wechsels der Getriebestufen regelmäßig der Kraftfluß zwischen Motor und Antriebsrädern durch Öffnen einer Kupplung unterbrochen werden.

Es ist grundsätzlich bekannt, hierzu eine automatisch gesteuerte Kupplung einzusetzen, d.h. die Kupplung wird beim Wechsel einer Getriebestufe bzw. eines Ganges automatisch geöffnet und nachfolgend wieder geschlossen. Im Hinblick auf einen erhöhten Komfort können beim Schließen der Kupplung vorhandene Drehzahldifferenzen zwischen Kupplungseingang und Kupplungsausgang berücksichtigt werden. Damit besteht beispielsweise die Möglichkeit, im Falle einer größeren Drehzahldifferenz die Kupplung mit einer längeren Schlupfphase zu schließen. Außerdem kann die Drehzahldifferenz bei einer gegebenenfalls vorhandenen automatischen Motorsteuerung berücksichtigt werden, derart, daß die Motordrehzahl und damit die Drehzahl des Einganges der Kupplung der Drehzahl des Ausganges der Kupplung angeglichen wird.

Aus der DE 40 12 595 A1 ist eine entsprechende automatisch gesteuerte Kupplung bekannt. Nach dieser Druckschrift ist eine Einrichtung zur Erkennung einer Schaltabsicht vorgesehen, derart, daß beim fahrerseitigen Wechsel der Getriebestufen ein die neue Getriebestufe repräsentierendes Signal erzeugt wird, bevor diese Getriebestufe vollständig eingestellt ist. In Verbindung mit den Signalen eines die Drehzahl des Getriebseinganges und damit des Kupplungsausganges erfassenden Sensors wird dann die bei erfolgter vollständiger Einschaltung der neuen Getriebestufe zu erwartende Drehzahl von Getriebeeingang bzw. Kupplungsausgang errechnet, wobei davon ausgegangen wird, daß das Fahrzeug während des Wechsels der Getriebestufen seine Fahrgeschwindigkeit nicht oder nur unwesentlich ändert.

Nach der DE 28 33 961 C2 ist vorgesehen, eine automatische Kupplung während eines Anfahrvorganges des Fahrzeuges so zu steuern, daß die Motordrehzahl innerhalb eines vorgegebenen, von der Belastung des Fahrzeuges, d.h. von der Stellung des Fahrpedales, abhängigen Bereiches bleibt. Bei der Fahrt soll die Kupplung automatisch derart betätigt werden, daß eine Drehzahldifferenz zwischen Kupplungseingang und Kupplungsausgang nach Maßgabe eines vorgegebenen Gradienten der Drehzahldifferenzänderung über die Zeit verringert wird.

Zur Ermittlung der eingangsseitigen und ausgangsseitigen Drehzahlen der Kupplung werden in der Regel am Fahrzeug ohnehin vorhandene Signalgeber ausgenutzt. So entspricht die eingangsseitige Drehzahl der Kupplung der Motordrehzahl, welche regelmäßig zum Zwecke einer Motorsteuerung registriert wird. Die ausgangsseitige Drehzahl der Kupplung kann aus dem Übersetzungsverhältnis der eingelegten Getriebestufe und den Drehzahlen der Antriebsräder ermittelt werden, welche bei moderneren Fahrzeugen regelmäßig mit Drehzahlgebern kombiniert sind, um beispielsweise ein Antiblockiersystem der Bremsanlage und/oder ein Antischlupfregelungssystem steuern zu können.

Die entsprechenden Signalgeber arbeiten mit hoher Zuverlässigkeit. Gleichwohl läßt sich auch bei funktionierenden Signalgebern nicht völlig ausschließen, daß die für die Kupplungssteuerung wünschenswerten Signale nicht zur Verfügung stehen, weil Fehler an den Signalleitungen oder deren Kontakten aufgetreten sind.

Deshalb ist es Aufgabe der Erfindung, auch bei Ausfall von Signalen eine gute Kupplungssteuerung zu erreichen.

Diese Aufgabe wird erfindungsgemäß dadurch gelöst, daß das Getriebe fahrerseitig zwischen unterschiedlichen Getriebestufen schaltbar und mit einem Sensor für die jeweils eingelegte Getriebestufe versehen ist, und daß bei fehlendem ausgangsseitigen Drehzahlsignal die nach einem Wechsel der Getriebestufen vor Schließen der bei diesem Getriebestufenwechsel geöffneten Kupplung auftretende Drehzahl ($U_{nach}$) des Kupplungsausganges aus der mit der Motordrehzahl übereinstimmenden, vor dem Öffnen der Kupplung für den Wechsel der Getriebestufen ermittelbaren Drehzahl ($U_{vor}$) des Kupplungseinganges sowie der Getriebeübersetzung ($a_{vor}$) vor dem Wechsel der Getriebestufen und der Getriebeübersetzung ($a_{nach}$) nach dem Wechsel der Getriebestufen bestimmt wird, entsprechend

$$a_{vor}U_{nach} = a_{nach}U_{vor}.$$

Die Erfindung beruht auf dem allgemeinen Gedanken, die Drehzahl des Kupplungsausganges bei geöffneter Kupplung im Notfall aus Parametern zu ermitteln, die zuletzt bei geschlossener Kupplung vorgelegen haben. Dabei wird berücksichtigt, daß die Drehzahl des Getriebeausganges ebenso wie die Drehzahl der Antriebsräder bei geschlossener Kupplung aus der Motordrehzahl errechnet werden kann, wenn die Übersetzung zwischen Motor und Getriebeausgang bekannt ist. Im Ergebnis ist dies gleichbedeutend damit, daß bekannt sein muß, welche Getriebestufe eingelegt ist.

In den meisten Fällen eines Wechsels der Getriebestufen bleibt die Fahrgeschwindigkeit des Fahrzeuges während des Zustandes der geöffneten Kupplung nahezu konstant. Dies ist gleichbedeutend damit, daß auch die Drehzahl des Getriebsausganges weitestgehend konstant bleibt. Bei konstant bleibender Drehzahl des Getriebeausganges kann aber beim Wechsel einer Getriebestufe am Getriebeeingang und damit am Kupplungsausgang nur eine Drehzahländerung auftreten, die durch die beim Wechsel der Getriebestufen aufgetretene Änderung der Übersetzung des Getriebes eindeutig bestimmt ist.

Bei geschlossener Kupplung haben Kupplungseingang und Kupplungsausgang gleiche Drehzahlen entsprechend der Motordrehzahl. Wenn nun bei gleichbleibender Fahrgeschwindigkeit und dementsprechend gleichbleibender Drehzahl des Getriebeausganges die Kupplung geöffnet und die Getriebestufe gewechselt wird, so muß sich die Drehzahl des Kupplungseinganges entsprechend der Änderung der Getriebeübersetzung verändern.

Diese Tatsachen werden bei der Erfindung ausgenutzt, um nach Öffnen der Kupplung gegebenenfalls ein Ersatzsignal für die Drehzahl des Kupplungsausganges bestimmen zu können.

Im Falle einer Betätigung einer Betriebsbremse des Fahrzeuges kann vor dem Öffnen der Kupplung der Gradient des durch das Bremsmanöver bewirkten Drehzahlabfalles des Motors ermittelt werden. Daraus kann dann ein analoger Gradient für den Drehzahlabfall des Getriebeausganges ermittelt werden.

Falls nun das Bremsmanöver nach Öffnen der Kupplung weitergeführt wird, kann der vorgenannte Gradient bei der Drehzahl des Getriebeausganges auch nach Öffnen der Kupplung während der Dauer des Bremsmanövers berücksichtigt werden, so daß im Falle einer tatsächlich gleichbleibenden Bremsverzögerung ein exakter Wert für die Drehzahl des Kupplungsausganges ermittelbar ist.

Bei sehr vielen Bremsmanövern ist eine derartige Voraussetzung zumindest näherungsweise gegeben, so daß das Ersatzsignal eine vergleichweise gute Übereinstimmung mit der tatsächlichen Drehzahl des Kupplungsausganges aufweist.

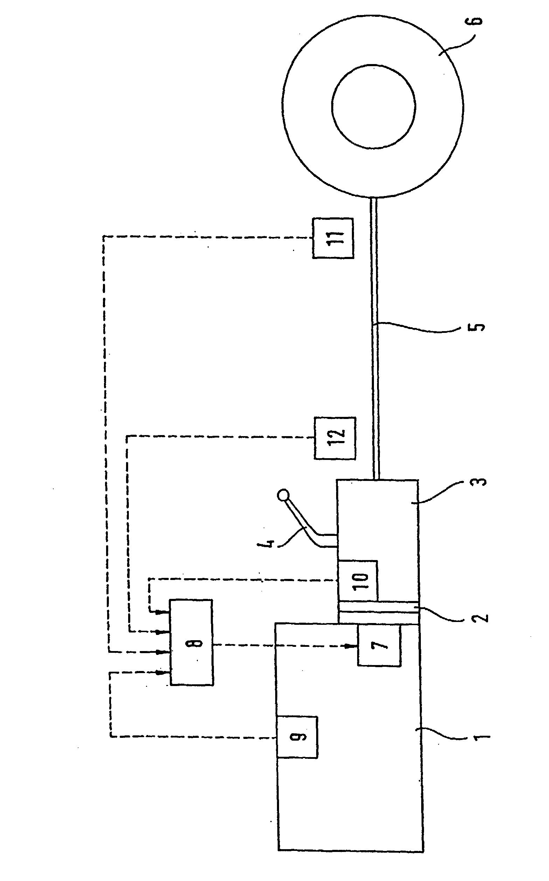

Im übrigen wird hinsichtlich bevorzugter Merkmale der Erfindung auf die Ansprüche die nachfolgende Erläuterung der Zeichnung verwiesen, anhand der eine besonders bevorzugte Ausführungsform der Erfindung dargestellt wird.

Dabei zeigt die einzige Figur eine schematisierte Darstellung eines Antriebstranges eines Kraftfahrzeuges sowie der für die erfindungsgemäße Kupplungssteuerung wesentlichen Komponenten.

Ein Verbrennungsmotor 1 ist über eine automatisch betätigte Kupplung 2 und ein Getriebe 3, dessen Getriebestufen bzw. Gänge durch manuelle Betätigung eines Schalthebels 4 gewechselt werden, und eine Antriebswelle 5, z.B. eine Kardanwelle, mit Antriebsrädern 6 eines nicht näher dargestellten Kraftfahrzeuges antriebsmäßig verbunden.

Die Betätigung der Kupplung 2 erfolgt automatisch mittels eines motorischen Stellaggregates 7, zu dessen Steuerung eine Steuerschaltung 8 vorgesehen ist, die bei Betätigung des Stellaggregates 7 vielfältige Parameter berücksichtigt.

Hierzu ist die Steuerschaltung 8 unter anderem mit einer Motorsteuerung 9 verbunden, die der Steuerschaltung 8 unter anderem Signale für die Motordrehzahl zuführt. Ein Signalgeber 10 am Getriebe 3 bzw. am Schalthebel 4 meldet die jeweils eingelegte Getriebestufe. Den Rädern 6 zugeordnete Drehzahlgeber 11 melden die jeweiligen Raddrehzahlen. Ein Signalgeber 12 zeigt an, ob eine Betriebsbremse des Fahrzeuges betätigt ist. Dieser Signalgeber 12 kann durch einen bei Bremsbetätigung eingeschalteten Bremslichtschalter gebildet werden, welcher in der Regel durch ein fahrerseitig betätigtes Bremspedal gesteuert wird.

Wenn im Falle eines normalen Betriebes die Kupplung 2 für einen Wechsel einer Getriebestufe des Getriebes 3 geöffnet wird, so kennt die Steuerschaltung 8 vor dem erneuten Schließen der Kupplung 2 einerseits die Drehzahl des Kupplungseinganges und andererseits die Drehzahl des Kupplungsausganges. Die Drehzahl des Kupplungseinganges entspricht der Motordrehzahl, die von der Motorsteuerung 9 gemeldet wird. Die Drehzahl des Kupplungsausganges wird durch die von den Drehzahlgebern 11 gemeldete Raddrehzahl und die jeweils eingelegte Getriebestufe bestimmt, die vom Signalgeber 10 gemeldet wird.

Nun sei angenommen, daß die Signale der Drehzahlgeber 11 nicht mehr zur Verfügung stehen.

Vor Öffnen der Kupplung 2 kann bei fehlerfrei arbeitender Kupplung 2 davon ausgegangen werden, daß Kupplungseingang und Kupplungsausgang gleiche Drehzahl haben. Wenn jetzt die Kupplung 2 für einen Wechsel der Getriebestufe geöffnet wird und davon ausgegangen werden kann, daß die Fahrgeschwindigkeit des Fahrzeuges und damit die Drehzahl der Räder 6 und des damit antriebsverbundenen Ausgangs des Getriebes 3 konstant bleiben, kann sich die Drehzahl des Kupplungsausganges bei geöffneter Kupplung 2 nur entsprechend der beim Wechsel der Getriebestufen auftretenden Änderungen der Getriebeübersetzung verändern. Wenn also die Getriebeübersetzung vor Wechsel der Getriebestufe den Wert $a_{vor}$ und nach dem Wechsel der Getriebestufe den Wert $a_{nach}$ hat, so gilt für die Drehzahlen $U_{vor}$ und $U_{nach}$ des Kupplungsausganges vor dem Getriebestufenwechsel:

$$a_{vor}U_{nach} = a_{nach}U_{vor},$$

wobei $U_{vor}$ der Motordrehzahl vor dem Öffnen der Kupplung 2 entspricht.

Nun möge ein Bremsmanöver erfolgen, welches vor Öffnen der Kupplung 2 eingeleitet und nach Öffnen der Kupplung 2 beendet wird.

Die Bremsbetätigung wird durch den Signalgeber 12 gemeldet. Die Steuerschaltung 8 kann nun den Gradienten des Abfalles der Motordrehzahl vor Öffnen der Kupplung 2 ermitteln. Dieser Gradient ist proportional zur Bremsverzögerung. Wenn nun davon ausgegangen wird, daß die Bremsverzögerung im wesentlichen konstant bleibt, muß sich die Drehzahl des Getriebeausganges auch nach dem Öffnen der Kupplung 2 mit gleichbleibendem Gradienten ändern, solange das Bremsmanöver andauert. Wenn dieser Effekt zusätzlich berücksichtigt wird, kann auch im Falle eines Bremsmanövers bei einem Wechsel der Getriebestufe und dem damit einhergehenden Öffnen der Kupplung 2 ein relativ genauer Wert für die Drehzahl des Kupplungsausganges bei geöffneter Kupplung 2 ermittelt werden.

Durch die Erfindung wird eine vorteilhafte Notfahrstrategie bei Ausfall der Signale für die Raddrehzahl bzw. für die Drehzahl des Kupplungsausganges geschaffen.

## Patentansprüche

1. Automatisch gesteuerte Kupplung (2) zwischen Motor (1) und Antriebstrang (3,5,6) eines Kraftfahrzeuges mit ausgangsseitig der Kupplung angeordnetem Getriebe (3), mit einem zum Öffnen und Schließen der Kupplung dienenden Stellaggregat (7), welches von einer Sensorik (8 bis 12) unter Berücksichtigung vorgegebener Parameter gesteuert wird, wobei die Sensorik Signalgeber (10) für den Zustand des Getriebes sowie eingangsseitig und ausgangsseitig der Kupplung angeordnete Signalgeber (9,11,12) zur Drehzahlerfassung aufweist und das Schließen der Kupplung in Abhängigkeit von Drehzahldifferenzen zwischen Eingang und Ausgang der Kupplung steuert, und wobei bei fehlendem ausgangsseitigen Drehzahlsignal ein Ersatzsignal erzeugt wird, und wobei die Kupplung beim Wechsel einer Getriebestufe automatisch öffnet,
   **dadurch gekennzeichnet,**
   daß das Getriebe (3) fahrerseitig zwischen unterschiedlichen Getriebestufen (Gängen) schaltbar und mit einem Sensor (10) für die jeweils eingelegte Getriebestufe versehen ist, und daß bei fehlendem ausgangsseitigen Drehzahlsignal die nach einem Wechsel der Getriebestufen vor Schließen der bei diesem Getriebestufenwechsel geöffneten Kupplung (2) auftretende Drehzahl ($U_{nach}$) des Kupplungsausganges aus der mit der Motordrehzahl übereinstimmenden, vor dem Öffnen der Kupplung (2) für den Wechsel der Getriebestufen ermittelbaren Drehzahl ($U_{vor}$) des Kupplungseinganges sowie der Getriebeübersetzung ($a_{vor}$) vor dem Wechsel der Getriebstufen und der Getriebeübersetzung ($a_{nach}$) nach dem Wechsel der Getriebestufen bestimmt wird, entsprechend

$$a_{vor}U_{nach} = a_{nach}U_{vor}.$$

2. Kupplung mit Getriebe nach Anspruch 1,
   **dadurch gekennzeichnet,**
   daß die Sensorik einen Signalgeber (12) für eine betätigte Betriebsbremse des Kraftfahrzeuges aufweist und bei Erzeugung des Ersatzsignales im Falle einer vor und nach dem letzten Öffnen der Kupplung (2) durchgehend betätigten Betriebsbremse für die Drehzahl des Ausganges des Getriebes (3) von einem während des Bremseinsatzes gleichbleibenden Gradienten für die Drehzahlabnahme ausgegangen wird.

3. Kupplung mit Getriebe nach Anspruch 1,
   **dadurch gekennzeichnet,**
   daß der Gradient der Drehzahlabnahme des Kupplungsausganges bei Bremsbetätigung aus der durch die Bremsbetätigung vor Öffnen der Kupplung (2) verursachten Abnahme der Motordrehzahl ermittelbar ist.

4. Kupplung mit Getriebe nach einem der Ansprüche 1 bis 3,
**dadurch gekennzeichnet,**
daß eine automatische Motorsteuerung (9) vorgesehen ist, die beim Schließen der Kupplung (2) eine Angleichung der Motordrehzahl an die Drehzahl des Ausganges der Kupplung (2) bzw. die vom Ersatzsignal repräsentierte Drehzahl bewirkt.

**Claims**

1. An automatic clutch (2) between the engine (1) and the drive train (3, 5, 6) of a motor vehicle, having a transmission (3) which is arranged on the output side of the clutch, having an adjusting unit (7) which serves for releasing and engaging the clutch and is controlled by a system of sensors (8 to 12) taking predetermined parameters into account, the system of sensors having signalling devices (10) for the state of the transmission as well as signalling devices (9, 11, 12) arranged on the input side and output side of the clutch for sensing rotational speed and controlling the engaging of the clutch as a function of differences in speed between the input and output of the clutch, and a substitute signal being generated if a speed signal fails to be obtained on the output side, and the clutch (2) being automatically released when there is a change of transmission stages, **wherein** the transmission (3) is able to be manually shifted between different transmission stages (gears) and is provided with a sensor (10) for the respectively selected transmission stage and wherein, when a speed signal on the output side fails to be obtained, the speed ($U_{nach}$) of the clutch output occurring after a change of transmission stages before engaging of the clutch (2) released during this change of transmission stages is determined from the speed ($U_{vor}$) of the clutch input coinciding with the engine speed and determinable before releasing the clutch (2) for the change of transmission stages as well as from the transmission ratio ($a_{vor}$) before the change of transmission stages and the transmission ratio ($a_{neu}$) after the change of transmission stages, corresponding to

$$a_{vor}U_{nach} = a_{neu}U_{vor}.$$

2. The clutch as claimed in claim 1, wherein the system of sensors has a signalling device (12) for an actuated service brake of the motor vehicle and, when the substitute signal is generated in the case of a service brake being actuated continuously before and after the last release of the clutch (2), a drop-in-speed gradient which remains the same during the use of the brake is taken as a basis for the speed of the output of the transmission (3).

3. The clutch as claimed in claim 1, wherein the gradient of the drop in speed of the clutch output on brake actuation can be determined from the drop in engine speed caused by the brake actuation before releasing the clutch (2).

4. The clutch as claimed in one of claims 1 to 3, wherein an automatic engine control (9) is provided which has the effect, when the clutch (2) is engaged, of making the engine speed match the speed of the output of the clutch (2), or the speed represented by the substitute signal.

**Revendications**

1. Embrayage à commande automatique (2) installé entre le moteur (1) et une chaîne motrice (3,5,6) d'un véhicule automobile comportant une transmission (3) disposée sur le côté de sortie de l'embrayage, comportant une unité de réglage (7) qui est utilisée pour ouvrir et fermer l'embrayage et qui est commandée par un système de détection (8 à 12) en tenant compte de paramètres prédéterminés, et dans lequel le dispositif de détection comporte des générateurs de signaux (10) pour l'état de la transmission ainsi que des générateurs de signaux (9,11,12) disposés sur le côté entrée et sur le côté sortie de l'embrayage, pour détecter la vitesse de rotation, et commande la fermeture de l'embrayage en fonction de différences entre les vitesses de rotation d'entrée et de sortie de l'embrayage, et dans lequel, dans le cas de l'absence d'un signal de vitesse de rotation côté sortie, un signal de remplacement est produit, et dans lequel l'embrayage s'ouvre automatiquement dans le cas de la commutation d'un étage de la transmission, caractérisé en ce que la transmission (3) peut être commutée, côté conducteur, entre différents étages de transmission (vitesses) et est équipée d'un capteur (10) pour l'étage respectivement enclenché de la transmission et que, dans le cas de l'absence d'un signal de vitesse de rotation côté sortie, la vitesse de rotation ($U_{nach}$) de la sortie de la transmission, qui apparaît après une commutation de l'étage de la transmission avant la fermeture de l'embrayage (2) ouvert lors de ce changement d'étage de la transmission, de la sortie de l'embrayage est déterminée à partir de la vitesse de rotation ($U_{vor}$) de l'entrée de l'embrayage, qui coïncide avec la vitesse de rotation du moteur et peut être déterminée avant l'ouverture de l'embrayage (2) pour la commutation des étages de la transmission, ainsi qu'à partir de la démultiplication de la transmission ($a_{vor}$) avant la commutation

des étages de la transmission, et de la démultiplication ($a_{nach}$) de la transmission, après la commutation des étages de la transmission, conformément à

$$a_{vor}U_{nach} = a_{nach}U_{vor}.$$

2. Embrayage comportant une transmission selon la revendication 1, caractérisé en ce que le système de détection comprend un générateur de signaux (12) pour un frein de service actionné du véhicule automobile et que, lors de la production du signal de remplacement, dans le cas où un frein de service est actionné d'une manière continue avant et après la dernière ouverture de l'embrayage (2), pour la vitesse de rotation de la sortie de la transmission (3) on part d'un gradient qui est constant pendant l'actionnement du frein, pour la réduction de la vitesse de rotation.

3. Embrayage comportant une transmission selon la revendication 1, caractérisé en ce que le gradient de la réduction de la vitesse de rotation de la sortie de l'embrayage peut être déterminé, lors de l'actionnement du frein, à partir de la réduction de la vitesse de rotation du moteur, provoquée par l'actionnement du frein avant l'ouverture de l'embrayage (2).

4. Embrayage comportant une transmission selon l'une des revendications 1 à 3, caractérisé en ce qu'il est prévu une unité (9) de commande automatique du moteur, qui lors de la fermeture de l'embrayage (2) provoque une égalisation de la vitesse de rotation du moteur sur la vitesse de rotation de la sortie de l'embrayage (2) ou sur la vitesse de rotation représentée par le signal de remplacement.